# EUROPÄISCHE PATENTSCHRIFT

(11) **EP 1 264 722 B1**
(45) Veröffentlichungstag und Bekanntmachung des Hinweises auf die Patenterteilung: **16.08.2006**
(21) Anmeldenummer: 02010224.0
(22) Anmeldetag: 16.05.2002
(51) Int. Cl.: B60J 7/053, B60J 7/00

(54) **Fahrzeugdach mit einem verstellbaren Schliesselement**
Vehicle roof with a movable closing element
Toit de véhicule avec un élément de fermeture déplaçable

(30) Priorität: 05.06.2001 DE 10127118
(43) Veröffentlichungstag der Anmeldung: 11.12.2002
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- DE-A- 19 906 516
- US-A- 4 089 557
- US-A- 4 257 646

## Beschreibung

Die vorliegende Erfindung betrifft ein Fahrzeugdach mit einem verstellbaren Schließelement gemäß dem Oberbegriff von Anspruch 1.

Ein solches gattungsgemäßes Fahrzeugdach ist beispielsweise aus der DE 44 03 175 C1 bekannt, bei welcher eine Dachöffnung in einer festen Dachfläche von einem Deckel verschlossen bzw. mindestens teilweise freigegeben wird, wobei das Dach als Schiebehebedach ausgebildet ist und an beiden Seiten des Deckels jeweils das obere Ende einer faltbaren, in Dachlängsrichtung verlaufenden Seitenblende angebracht ist, deren unteres Ende in einer dachfesten Führung in Dachlängsrichtung mit dem Deckel verschiebbar geführt ist. Die Seitenblende ist in Dachhöhenrichtung faltbar, um Ausstellbewegungen des Deckels mitmachen zu können. Sie dient als Sichtschutz bezüglich der Deckelmechanik.

Aus der DE 38 25 838 C1 ist ein weiteres gattungsgemäßes Fahrzeugdach bekannt, bei welchem ein Deckel eines Schiebehebedaches eine in einer festen Dachhaut ausgebildete Dachöffnung verschließen bzw. freigeben kann. Im hinteren Endbereich des Deckels ist eine in Dachlängsrichtung zusammen mit dem Deckel verschiebbar geführte Wasserrinne vorgesehen, welche fest mit einer in Dachlängsrichtung verschiebbar geführten Seitenblende verbunden ist, die zu beiden Seiten des Deckels vorgesehen ist, um die Deckelmechanik abzudecken. Um eine Verblendung über die gesamte Deckellänge auch bei ausgestelltem Deckel zu erzielen, ist die Blende lamellenartig mehrteilig ineinanderschiebbar ausgebildet, wobei sich die Ausdehnung der Blende in Dachhöhenrichtung mittels zwischen den einzelnen Lamellenstreifen vorgesehenen Federn fächerartig auseinander spreizen kann.

Es ist Aufgabe der vorliegenden Erfindung, ein Fahrzeugdach zu schaffen, bei welchem hinter dem vorderen Schließelement ein hinteres Schließelement angeordnet ist und dennoch für einen seitlichen Einklemmschutz im Bereich des hinteren Schließelements gesorgt ist.

Diese Aufgabe wird erfindungsgemäß gelöst durch ein Fahrzeugdach, wie es in Anspruch 1 definiert ist. Dabei ist vorteilhaft, dass durch das Vorsehen zweier Seitenblenden hinter der Wasserrinne unterhalb des hinteren Schließelements in dessen seitlichen Randbereichen, wobei die Seitenblenden in einer dachfesten Führung geführt sind und zusammen mit dem vorderen Schließelement nach hinten verschiebbar sind, ein Einklemmschutz im seitlichen Randbereich des hinteren Schließelements auf einfache Weise realisiert werden kann.

Bevorzugte Ausgestaltungen der Erfindung ergeben sich aus den Unteransprüchen.
- FIG. 1: einen Längsschnitt im Bereich der Wasserrinne im hinteren Endbereich des vorderen Deckels eines öffnungsfähigen Fahrzeugdaches gemäß einer ersten Ausführungsform, wobei sich der vordere Dekkel in Schließstellung befindet;
- FIG. 2: eine Ansicht wie FIG. 1, wobei jedoch der vordere Deckel in einer Stellung gezeigt ist, in welcher die Deckelhinterkante abgesenkt ist;
- FIG. 3: eine Ansicht wie FIG. 1, wobei jedoch der vordere Deckel in einer Stellung gezeigt ist, in welcher die Deckelhinterkante nach oben ausgestellt ist;
- FIG. 4: eine Aufsicht auf die Wasserrinne von FIG. 1 bis 3;
- FIG. 5: schematisch einen Längsschnitt des gesamten Fahrzeugdaches, wobei der vordere Deckel in seiner Schließstellung gezeigt ist; und
- FIG. 6: eine Ansicht wie FIG. 5 wobei der vordere Deckel jedoch in einer Stellung gezeigt ist, in welcher er unter den hinteren Deckel geschoben ist.
- FIG. 7: eine Ansicht ähnlich zu FIG. 1 bis 3, wobei jedoch die Wasserrinne in einer abgewandelten Ausführungsform dargestellt ist und das Fahrzeugdach unter Weglassung des vorderen Deckels hauptsächlich im Bereich des hinteren Deckels gezeigt ist;
- FIG. 8: einen Schnitt in der Ebene der Linie VIII-VIII von FIG. 7, wobei jedoch das Ausgleichselement der Wasserrinne in einer gegenüber der Darstellung gemäß FIG. 7 abgewandelten Ausführungsform dargestellt ist;
- FIG. 9: einen Schnitt in der Ebene der Linie IX-IX von FIG. 7; und
- FIG. 10: einen Schnitt in der Ebene der Linie X-X von FIG. 9, wobei jedoch der Bereich der hinteren Wange der Wasserrinne nur schematisch dargestellt ist.

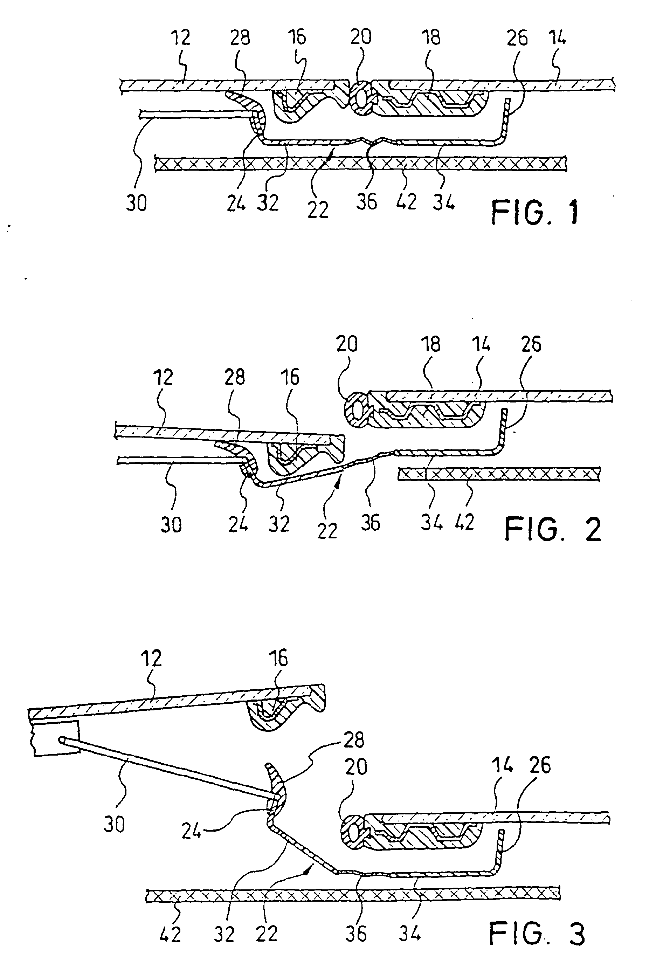

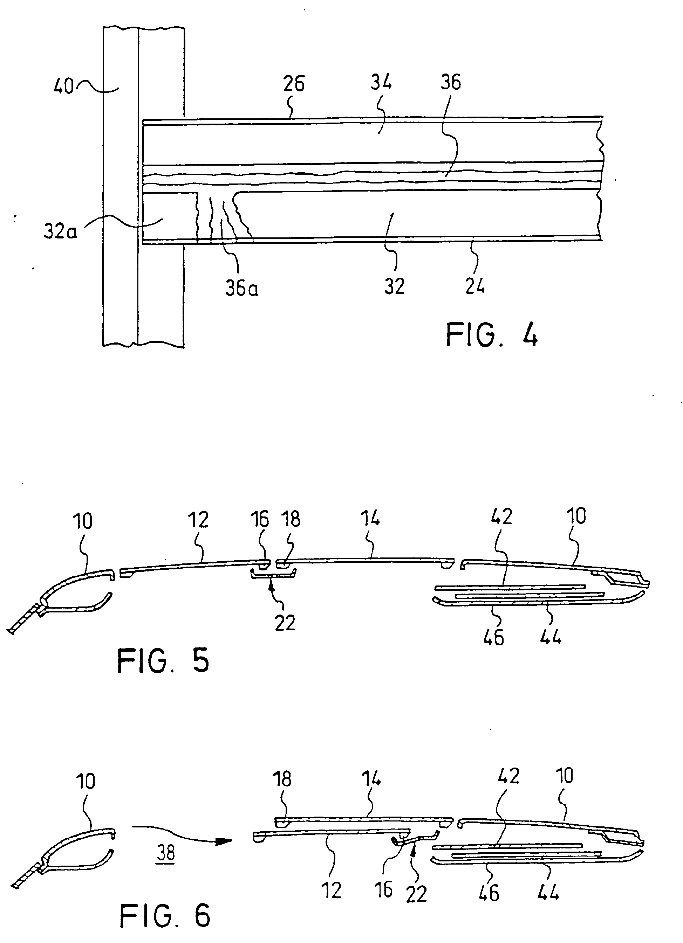

Gemäß FIG. 1 und 5 umfasst ein öffnungsfähiges Fahrzeugdach gemäß einer ersten Ausführungsform eine feste Dachhaut 10, welche eine Dachöffnung 38 aufweist, die in FIG. 5 von einem vorderen Deckel vorderes Schließelement 12 und einem dahinter angeordneten hinteren Deckel (hinteres Schließelement) 14 verschlossen wird, die beide als transparente Deckel, vorzugsweise als Glasdeckel, ausgebildet sind. Der vordere Deckel 12 ist in seinem hinteren Endbereich mit einer Verstärkung 16 versehen, während der hintere Deckel 14 in seinem vorderen Endbereich mit einer Umschäumung bzw. Verstärkung 18 versehen ist, welche an ihrem vorderen Ende ein Hohlkammerdichtungselement 20 zur Abdichtung des Stoßes zwischen dem vorderen Deckel 12 und dem hinteren Deckel 14 trägt. Die Verstärkungen 16 und 18 und das Dichtungselement 20 sind nicht-transparent ausgebildet.

Im Bereich unterhalb des Stoßes zwischen den beiden Deckeln 12 und 14 ist eine Wasserrinne 22 vorgesehen, welche in Dachquerrichtung verläuft und im Schnitt im wesentlichen U-förmig ausgebildet ist, wobei der Basisbereich bzw. der Grund der Wasserrinne 22 vorne und hinten von einer vorderen bzw. hinteren Wange 24 bzw. 26 begrenzt wird. Die vordere Wange 24 trägt an ihrer Oberseite eine Dichtungslippe 28, welche in der in den FIG. 1 und 5 gezeigten Schließstellung an der Unterseite des vorderen Deckels 12 anliegt. Ferner ist die vordere Wange 24 mit einem Ausstellhebel 30 verbunden, der seinerseits an dem vorderen Deckel 12 bzw. dessen Ausstellmechanik angreift

Die Wasserrinne 22 umfasst im wesentlichen drei Bereiche: einen vorderen Wasserrinnenabschnitt bzw. Wasserrinnenbereich 32 (Festbereich), der die vordere Wange 24 und den vorderen Teil des Basisabschnitts umfasst, einen hinteren Wasserrinnenabschnitt bzw. Wasserrinnenbereich 34, der die hintere Wange 26 und einen hinteren Abschnitt des Basisabschnitts umfasst, sowie einen flexiblen Bereich 36, welcher wasserundurchlässig ist und den vorderen Wasserrinnenbereich 32 mit dem hinteren Wasserrinnenbereich 34 verbindet. Der flexible Bereich 36 erstreckt sich dabei in Dachquerrichtung, siehe auch FIG. 4, und kann beispielsweise balgähnlich ausgestaltet sein. Die Wasserrinne 22 ist so dimensioniert, dass sie den gesamten nichttransparenten Bereich im Bereich des Deckelstoßes, d.h. die Verstärkungen 16 und 18 und die Dichtung 20, zum Fahrzeuginnenraum hin verdeckt. Die Verstärkungen 16 und 18 sind jeweils möglichst nahe an dem jeweiligen Deckelende angeordnet, um die Ausdehnung des nichttransparenten Bereiches zu minimieren.

Der vordere Deckel 12 ist vorzugsweise als Schiebehebedeckel ausgebildet, d.h. er kann aus der Schließstellung wahlweise mit seiner Deckelhinterkante ausgestellt werden oder nach Absenken der Deckelhinterkante unter den hinteren Dekkel 14 geschoben werden, um eine vordere Dachöffnung 38 (siehe FIG. 6) freizulegen. Der hintere Deckel 14 ist vorzugsweise als Ausstelldeckel, d.h. mit ausstellbarer Hinterkante, oder als Spoilerdeckel ausgebildet, d.h. der Deckel kann mit ausgestellter Hinterkante nach hinten geschoben werden. Alternativ kann der hintere Deckel 14 jedoch auch als Festelement, d.h. nicht verstellbar, ausgebildet sein.

Die Wasserrinne 22 ist mit dem hinteren Wasserrinnenbereich 34 gemäß FIG. 4 in einer im wesentlich horizontal in Dachlängsrichtung verlaufenden Führungsschiene 40 geführt, so dass die Wasserrinne 22 mit dem vorderen Deckel 12 zusammen nach hinten unter den hinteren Deckel 14 geschoben werden kann, wie dies in FIG. 6 angedeutet ist.

Der flexible Bereich 36, der gemäß FIG. 4 etwa in der Mitte der Wasserrinne 32 angeordnet ist, hat die Funktion, ein Verschwenken des vorderen Wasserrinnenbereichs 32 bezüglich des hinteren Wasserrinnenbereichs 34 zu ermöglichen. Bei der gezeigten Ausführungsform ist dabei, wie oben bereits erwähnt, der hintere Wasserrinnenbereich 34 in der Führungsschiene 40 geführt und dabei nichtschwenkbar ausgebildet, während der vordere Wasserrinnenbereich 32 mittels des flexiblen Bereichs 36 bezüglich des hinteren Wasserrinnenbereichs 34 nach oben bzw. nach unten schwenkbar ist.

Gemäß FIG. 5 beginnt das Öffnen des vorderen Deckels 12 damit, dass zwei Schiebehimmel 42 und 44, die in der in FIG. 1 gezeigten Schließstellung hintereinanderliegend unterhalb des vorderen Deckels 12 bzw. des hinteren Deckels 14 angeordnet sind, um die Dachöffnung bezüglich des Fahrzeuginnenraums abzudecken, nach hinten geschoben werden, wobei gemäß FIG. 5 in der Endstellung beide Schiebedeckel übereinanderliegend in einer Ablage 46 angeordnet sind. Sobald der vordere Schiebehimmel 42 hinter den flexiblen Bereich 36 der Wasserrinne 22 geschoben wurde, kann ein Absenken des mit der Verstärkung 16 versehenen hinteren Endbereichs des vorderen Deckels 12 erfolgen, wobei die Unterseite der Verstärkung 16 von oben zur Anlage an den vorderen Wasserrinnenbereich 32 gelangt und diesen mit nach unten drückt bzw. nach unten verschwenkt, wie dies in FIG. 2 dargestellt ist. Dabei kann der vordere Wasserrinnenbereich 32 unter das Niveau des vorderen Schiebehimmels 42 gedrückt werden. Ausgehend von der in FIG. 2 gezeigten Stellung kann dann der vordere Dekkel 12 in die in FIG. 6 gezeigte Stellung gebracht werden, in welcher er zusammen mit der Wasserrinne 22 nach hinten unter den hinteren Deckel 14 geschoben wurde.

Wenn dagegen der vordere Deckel 12 ausgehend von der in FIG. 1 gezeigten Schließstellung mit seiner Hinterkante ausgestellt werden soll, kann der vordere Schiebehimmel 42 grundsätzlich auch mindestens zum Teil geschlossen bleiben. Der Ausstellhebel 30 wird durch die Ausstellbewegung des vorderen Deckels 12 bzw. der Ausstellbewegung der entsprechenden Deckelmechanik dazu veranlasst, den vorderen Wasserrinnenbereich 32 ein Stück weit nach oben mitzunehmen, d.h. ein Stück weit auszustellen, wobei gemäß FIG. 3 die vordere Wange 24 über das Niveau des hinteren Deckels 14 angehoben wird. In dieser Stellung wirkt die Wasserrinne 22 als Schwallwasserschutz für Wasser, welches z.B. bei Bremsbewegungen von der Oberseite des hinteren Deckels 14 in die Dachöffnung gelangen könnte.

Wie aus FIG. 4 ersichtlich ist, kann sich der flexible Bereich 36 im seitlichen Randbereich mit einem Bereich 36a in Fahrtrichtung nach vorne erstrecken, um zu vermeiden, dass der vordere Wasserrinnenbereich 32 auch ganz am Rand verschwenkbar sein muss; vielmehr kann auf diese Weise ein Bereich 32a von der Schwenkbewegung ausgenommen bleiben.

Gemäß FIG. 1 bis 3 kann die hintere Wange 26 der Wasserrinne 22 bis zur Unterseite der hinteren Deckelscheibe 14 hochgezogen sein, um einen Schutz vor dem Einklemmen von Gegenständen und Körperteilen zwischen dem vorderen Deckel 12, insbesondere in dessen hinterem Endbereich, und dem hinteren Deckel 14 beim Zurückfahren des vorderen Deckels 12 zu realisieren. Die Ausführungsform der Wasserrinne gemäß den FIG. 1 bis 3 mit fester hinterer Wange 26, die als Blende und Einklemmschutz für den vorderen Deckel 12 wirkt, wobei vorzugsweise ein Spalt von weniger als 4 mm zwischen der Unterseite des hinteren Deckels 14 und der Oberkante der hinteren Wange 26 verbleibt, eignet sich vor allem für Fahrzeugdächer, bei welchen die Bewegungslinie der Wasserrinne 22 parallel zu der Unterseite des hinteren Deckels 14 verläuft und die hintere Verstärkung des hinteren Deckels 14 nicht überfahren werden muss.

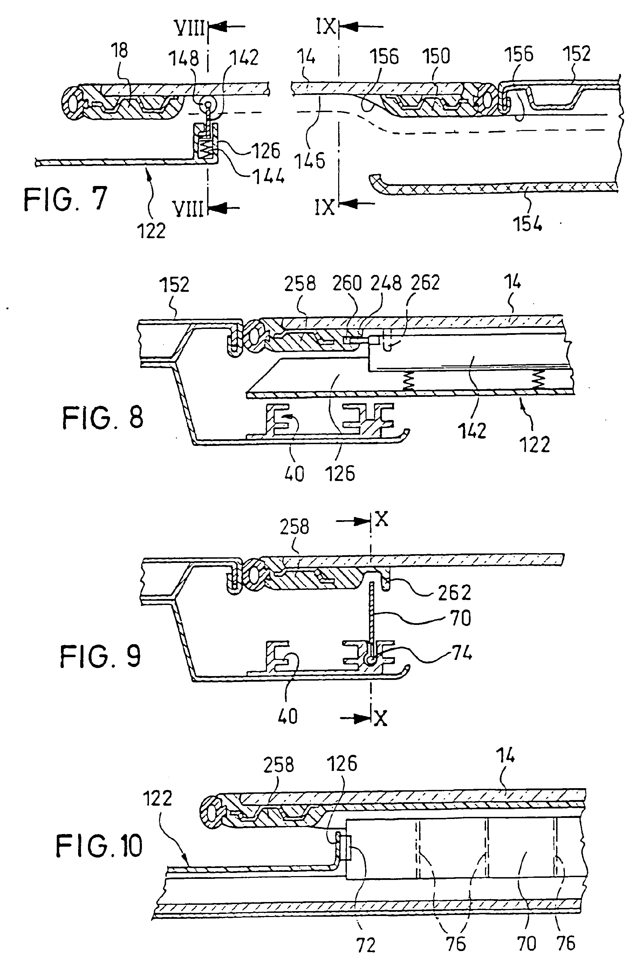

In den FIG. 7 bis 10 ist eine Ausführungsform der hinteren Wange 126 der Wasserrinne 122 gezeigt, bei welcher die hintere Wange 126 mit einem Ausgleichselement 142 versehen ist, welches eine Niveauveränderung zwischen der Unterseite des hinteren Deckels 14 und der Wasserrinne 122 aufgrund der Verschiebebewegung der Wasserrinne 122 in Dachlängsrichtung ausgleichen kann. Zu diesem Zweck ist das Ausgleichselement 142 in Dachhöhenrichtung verstellbar. Das Ausgleichselement 142 ist als Blendenstreifen ausgebildet, der im wesentlichen senkrecht orientiert ist und in Dachquerrichtung verläuft. Das untere Ende des Ausgleichselements 142 ist in der hinteren Wange 126 der Wasserrinne 122 aufgenommen, die als doppellippige Konstruktion ausgebildet ist, in welche das Ausgleichselement 142 von oben eingesteckt ist. Am Boden der hinteren Wange 126 ist ein Federelement 144 vorgesehen, welches das Ausgleichselement 142 nach oben zur Unterseite 146 des hinteren Deckels 14 vorspannt. Bei der Ausführungsform des Ausgleichselements 142 gemäß FIG. 7 ist an der Oberseite des Ausgleichselements 142 jeweils im Randbereich eine Rolle 148 vorgesehen, welche von dem Federelement 144 zur Anlage an einer an der Unterseite 146 des hinteren Deckels 14 im seitlichen Randbereich vorgesehene Steuerbahn 156 gebracht wird. Durch die Kontur der Steuerbahn wird somit die vertikale Position des Ausgleichselements 142 in Abhängigkeit von der Verschiebestellung der Wasserrinne 122 gesteuert, um jederzeit eine möglichst vollständige Blenden- bzw. Einklemmschutzwirkung bezüglich des Spalts zwischen der Wasserrinne 122 und dem hinteren Deckel 14 zu realisieren. Statt einer Rolle 148 kann auch ein Gleiter (nicht gezeigt) verwendet werden, der dann entlang der Steuerbahn 156 gleitet.

In seinem hinteren Endbereich ist der hintere Deckel 14 mit einer hinteren Dekkelumschäumung bzw. -verstärkung 150 versehen, welche an eine feste Dachfläche 152 angrenzt. Unterhalb des Bereichs der hinteren Umschäumung 150 und der festen Dachfläche 152 ist in bekannter Weise ein Festhimmel 154 vorgesehen, wobei der Abstand so gewählt ist, dass die Wasserrinne 122 und gegebenenfalls der hintere Bereich des vorderen Deckels 12 unter die feste Dachfläche 152 geschoben werden kann. Falls das Fahrzeugdach mit den Schiebehimmeln 42, 44 gemäß FIG. 5 und 6 verstehen ist, müssen diese ebenfalls zwischen Festhimmel 154 (bzw. 46) und fester Dachfläche 152 aufnehmbar sein.

Im Bereich der hinteren Deckelumschäumung 150 des hinteren Deckels 14 und der festen Dachfläche 152 ist die Steuerbahn 156 für die Rolle 148 des Ausgleichselements 142 angedeutet. Die Rolle 148 wirkt im Zusammenspiel mit der Steuerbahn 156 als Steuerelement für die Verstellung des Ausgleichselements 142.

In FIG. 8 ist eine abgewandelte Ausführungsform der Steuerung des Ausgleichselements 142 dargestellt, wobei in diesem Fall statt einer Steuerbahn, an welcher eine Rolle oder ein Gleiter anliegt, ein im Bereich einer seitlichen Umschäumung 258 des hinteren Deckels 14 eingefräster Steuerschlitz 260 vorgesehen ist, dessen Öffnung zur Dachinnenseite weist und in den ein stiftartiges Steuerelement 248 eingreift, welches an dem seitlichen Rand des Ausgleichselements 142 vorgesehen ist. In dem Steuerschlitz 260 ist das Steuerelement 248 verschiebbar geführt, wodurch die Höhenverstellung des Ausgleichselements 142 in Abhängigkeit von der Schiebestellung der Wasserrinne 122 bzw. des vorderen Deckels 12 gesteuert wird.

In alternativer Ausgestaltung kann der Steuerschlitz 260 statt in der seitlichen Umschäumung 258 auch in einer an der Unterseite des hinteren Deckels 14 vorgesehenen in Dachlängsrichtung verlaufenden Seiten- bzw. Innenblende 262 vorgesehen sein.

In FIG. 8 ist ferner zu erkennen, wie sich eine feste Dachfläche 152 seitlich des hinteren Deckels 14 erstreckt, die einen Teil der Fahrzeugkarosserie bildet und an welcher die Führungsschiene 40 zur Führung des vorderen Deckels 12 und der Wasserrinne 122 angebracht ist. Auch die feste Dachfläche 152 hinter dem hinteren Deckel 14 gemäß FIG. 7 wird üblicherweise von der Karosserie gebildet.

Aus FIG. 9 und 10 ist ersichtlich, dass hinter der Wasserrinne 122 in den beiden seitlichen Randbereichen des hinteren Deckels 14 jeweils eine Seitenblende 70 vorgesehen ist, welche vertikal orientiert ist und sich in Dachlängsrichtung erstreckt. Die Seitenblende 70 ist gemäß FIG. 10 mittels einer Verbindung 72 an der hinteren Wange 126 (die in FIG. 10 nur schematisch dargestellt ist) befestigt, wobei die Verbindung 72 beispielsweise als Clip-Befestigung ausgebildet sein kann. An ihrer Unterseite ist die Seitenblende 70 in der Führungsschiene 40 mittels eines Führungselements 74 in Dachlängsrichtung verschiebbar geführt. Falls die Länge der Führungsschiene 40 nicht ausreichen sollte, kann sich nach hinten (nicht dargestellte) zusätzliche Führung für das Führungselement 74 der Seitenblende 70 anschließen, welche beispielsweise als geschlitztes Rohr ausgebildet sein kann und mit einem bestimmten Krümmungsradius zur Dachinnenseite hin gekrümmt ist. In diesem Fall ist die Seitenblende 70 um die Dachhöhenrichtung biegeweich ausgebildet, so dass sie der nach innen gekrümmten Bahn der zusätzlichen Führung folgen kann. Eine solche biegeweiche Ausführung der Seitenblenden 70 kann beispielsweise dadurch erzielt werden, dass, wie in FIG. 10 mit gestrichelten Linien angedeutet, die Seitenblende 70 mit in Höhenrichtung verlaufenden Bereichen 76 mit verringerter Wandstärke versehen ist. Auf diese Weise kann die Seitenblende 70 scharnierartig ausgebildet sein.

Über die Verbindung 72, über welche die Seitenblende 70 fest mit der Wasserrinne 122 verbunden ist, wird die Seitenblende 70 bei einer Verschiebung des vorderen Deckels 12 (und damit der Wasserrinne 122) nach hinten ebenfalls nach hinten entlang der Führungsschiene 40 bzw. der zusätzlichen Führung verschoben. Falls im Zuge dieser Verschiebebewegung Niveauunterschiede zwischen der Unterseite des hinteren Deckels 14 und der Oberkante der Seitenblende 70 auftreten, was beispielsweise durch eine Krümmung des Deckels 14 in Dachlängsrichtung oder an der Deckelunterseite vorgesehene Verstärkungen, wie beispielsweise der hinteren Umschäumung 150, der Fall sein kann, ist es vorteilhaft, eine bereits in FIG. 8 gezeigte, sich von der Unterseite des hinteren Deckels 14 aus nach unten erstreckende Innenblende 262 vorzusehen, welche bezüglich der jeweiligen Seitenblende 70 innenliegend ausgebildet ist und deren unteres Ende das obere Ende der Seitenblende 70 überlappt. Auf diese Weise kann zwischen der Unterseite des hinteren Deckels 14 und der Oberkante der Seitenblende 70 ein gewisser Spalt verbleiben, der zum Ausgleich von Niveauunterschieden zur Verfügung steht.

Die Innenblende 262 kann beispielsweise auch doppellippig ausgeführt sein, wobei die Oberkante der Seitenblende 70 dann zwischen der Doppellippe verläuft. Dies erhöht die Sicherheit gegen in seitlicher Richtung ausgeübte Kräfte auf die Seitenblende 70 und erlaubt eine geringere Führungstiefe in Dachhöhenrichtung in der Führungsschiene 40.

Die Seitenblende 70 wirkt als Sichtschutz und als Schutz vor dem Einklemmen von Gegenständen und Körperteilen zwischen dem hinteren Deckel 14 und der Führungsschiene 40.

Das Ausgleichselement 142 kann statt wie gezeigt in Höhenrichtung verschiebbar zu sein, um eine in Dachquerrichtung verlaufende Achse drehbar sein, um Niveauunterschiede im Verlauf der Verschiebebewegung der Wasserrinne 122 in Dachlängsrichtung auszugleichen, wobei die in den FIG. 7 und 8 gezeigten Ausführungen der Steuerung der vertikalen Position des Ausgleichselements 142 analog realisiert werden können.

### Bezugszeichenliste

- 10: feste Dachhaut
- 12: vorderer Deckel
- 14: hinterer Deckel
- 16: Verstärkung von 12
- 18: Verstärkung von 14
- 20: Dichtungselement
- 22: Wasserrinne
- 24: vordere Wange von 22
- 26: hintere Wange von 22
- 28: Dichtungselement an 22
- 30: Ausstellhebel
- 32, 32a: vorderer Wasserrinnenabschnitt
- 34: hinterer Wasserrinnenabschnitt
- 36, 36a: flexibler Bereich von 22
- 38: Dachöffnung
- 40: Führungsschiene
- 70: Seitenblende
- 72: Verbindung
- 74: Führungselement von 70
- 76: scharnierartige Bereiche von 70
- 122: Wasserrinne
- 126: hintere Wange von 122
- 142: Ausgleichselement
- 144: Federelement
- 146: Unterseite von 14
- 148: Rolle
- 150: hintere Verstärkung von 14
- 152: feste Dachfläche
- 154: Festhimmel
- 156: Steuerbahn
- 248: stiftartiges Steuerelement
- 258: seitliche Umschäumung von 14
- 260: Steuerschlitz
- 262: Innenblende von 14

## Patentansprüche

1. Fahrzeugdach mit einem einen Teil einer Dachöffnung (38) wahlweise verschließenden oder mindestens teilweise freigebenden verstellbaren vorderen Schließelement (12), einer Wasserrinne (22, 122), die unterhalb des hinteren Endbereichs (16) des vorderen Schließelements (12) angeordnet ist, um eindringendes Wasser aufzufangen und abzuleiten, **dadurch gekennzeichnet, dass** hinter dem vorderen Schließelement (12), im restlichen Teil der Dachöffnung (38), ein als ausstellbarer Deckel oder als transparentes Festelement ausgbildetes hinteres Schließelement (14) angeordnet ist, wobei das vordere Schließelement (12) entlang einer dachfesten Führungsschiene (40) unter das hintere Schließelement (14) verschiebbar ist, und hinter der Wasserrinne (22, 122) unterhalb des hinteren Schließelements (14) in dessen beiden seitlichen Randbereichen jeweils eine Seitenblende (70) angeordnet ist, die in der dachfesten Führungschiene (40) geführt und mit dem vorderen Schließelement (12) zusammen nach hinten verschiebbar ist, wobei die Seitenblenden (70) als Schutz vor dem Einklemmen von Gegenständen und Körperteilen ausgebildet sind.

2. Fahrzeugdach nach Anspruch 1, **dadurch gekennzeichnet, dass** die Wasserrinne (22,122) beim Freigeben der Dachöffnung (38) zusammen mit dem vorderen Schließelement (12) nach hinten verschiebbar ist und die Seitenblenden (70) mit der Wasserrinne (22, 122) verbunden sind.

3. Fahrzeugdach nach Anspruch 2, **dadurch gekennzeichnet, dass** die Seitenblenden (70) an der Wasserrinne (122) angeklipst sind.

4. Fahrzeugdach nach Anspruch 2 oder 3, **dadurch gekennzeichnet, dass** die Wasserrinne (122) in Dachlängsrichtung in der dachfesten Führungsschiene (40) geführt ist.

5. Fahrzeugdach nach einem der vorhergehenden Ansprüche, **dadurch gekennzeichnet, dass** das hintere Schließelement (14) in seinen beiden seitlichen Randbereichen an seiner Unterseite (146) jeweils mit einer festen Innenblende (262) versehen ist, die innenliegend bezüglich der jeweiligen Seitenblende (70) angeordnet ist und den oberen Rand derselben jeweils überdeckt.

6. Fahrzeugdach nach Anspruch 5, **dadurch gekennzeichnet, dass** die Innenblenden (262) jeweils doppellippig ausgebildet sind, wobei der obere Rand der jeweiligen Seitenblende (70) zwischen den beiden Lippen geführt ist.

7. Fahrzeugdach nach einem der vorhergehenden Ansprüche, **dadurch gekennzeichnet, dass** eine separate Führung für die Seitenblenden (70) im hinteren Bereich des Fahrzeugdachs in jeweils nach innen gekrümmter Bahn verläuft und die Seitenblenden (70) um die Höhenrichtung biegeweich sind, um der gekrümmten Bahn zu folgen.

8. Fahrzeugdach nach Anspruch 7, **dadurch gekennzeichnet, dass** die Seitenblenden (70) mit in Höhenrichtung verlaufenden Bereichen (76) mit verringerter Wandstärke versehen sind.

9. Fahrzeugdach nach einem der vorhergehenden Ansprüche, **dadurch gekennzeichnet, dass** das vordere Schließelement (12) transparent ausgebildet ist, und in seinem hinteren Endbereich mit einer nichttransparenten Verstärkung (16) versehen ist.

10. Fahrzeugdach nach Anspruch 9, **dadurch gekennzeichnet, dass** die Wasserrinne (22, 122) die Verstärkung (16) untergreift.

11. Fahrzeugdach nach Anspruch 9 oder 10, **dadurch gekennzeichnet, dass** das vordere Schließelement (12) als Schiebe-Hebe-Dach-Deckel ausgebildet ist.

12. Fahrzeugdach nach einem der vorhergehenden Ansprüche, **dadurch gekennzeichnet, dass** das hintere Schließelement (14) in seinem vorderen Endbereich mit einer nicht-transparenten Verstärkung (18) versehen ist.

13. Fahrzeugdach nach Anspruch 12, **dadurch gekennzeichnet, dass** die Wasserrinne (22, 122) die Verstärkung (18) des hinteren Schließelements (14) untergreift und die hintere Wange (26, 126) der Wasserrinne (22, 122) bis zur Unterseite des hinteren Schließelements (14) hochgezogen ist.

14. Fahrzeugdach nach Anspruch 13, **dadurch gekennzeichnet, dass** die hintere Wange (26, 126) der Wasserrinne (22, 122) so ausgebildet ist, dass sie als Blende und als Schutz vor dem Einklemmen von Gegenständen oder Körperteilen für den hinteren Endbereich des vorderen Schließelements (12) wirkt.

15. Fahrzeugdach nach einem der vorhergehenden Ansprüche, **dadurch gekennzeichnet, dass** die Wasserrinne (22) mit einem quer zu der Fahrtrichtung verlaufenden flexiblen wasserundurchlässigen Bereich (36) versehen ist, um ein Verschwenken des vorderen Wasserrinnenbereichs (32) gegenüber dem hinteren Wasserrinnenbereich (34) zu ermöglichen.

## Claims

1. Vehicle roof having a movable front closing element (12) that optionally closes or at least partly opens a part of a roof opening (38) , a water channel (22, 122) which is arranged underneath the rear end region (16) of the front closing element (12) in order to intercept and discharge penetrating water, **characterized in that**, behind the front closing element (12), in the remaining part of the roof opening (38), there is arranged a rear closing element (14) which is formed as a panel that can be raised or as a transparent fixed element, it being possible for the front closing element (12) to be displaced under the rear closing element (14) along a guide rail (40) fixed to the roof, and, behind the water channel (22, 122), underneath the rear closing element (14), in the two lateral edge regions of the latter, in each case there being arranged a side membrane (70), which is guided in the guide rail (40) fixed to the roof and can be displaced rearwards together with the front closing element (12), the side membranes (70) being designed as a safeguard against objects and body parts being clamped in.

2. Vehicle roof according to Claim 1, **characterized in that**, when the roof opening (38) is opened, the water channel (22, 122) can be displaced rearwards together with the front closing element (12), and the side membranes (70) are connected to the water channel (22, 122).

3. Vehicle roof according to Claim 2, **characterized in that** the side membranes (70) are clipped onto the water channel (122).

4. Vehicle roof according to Claim 2 or 3, **characterized in that** the water channel (122) is guided in the roof longitudinal direction in the guide rail (40) fixed to the roof.

5. Vehicle roof according to one of the preceding claims, **characterized in that**, in its two lateral edge regions, on its underside (146) , the rear closing element (14) is in each case provided with a fixed inner membrane (262), which is arranged on the inside with respect to the respective side membrane (70) and in each case covers the upper edge of the same.

6. Vehicle roof according to Claim 5, **characterized in that** the inner membranes (262) are in each case formed with a double lip, the upper edge of the respective side membrane (70) being guided between the two lips.

7. Vehicle roof according to one of the preceding claims, **characterized in that** a separate guide for the side membranes (70) runs in the rear region of the vehicle roof on a path which is respectively curved inwards, and the side membranes (70) are flexible about the vertical direction in order to follow the curved path.

8. Vehicle roof according to Claim 7, **characterized in that** the side membranes (70) are provided with regions (76) with a reduced wall thickness extending in the vertical direction.

9. Vehicle roof according to one of the preceding claims, **characterized in that** the front closing element (12) is transparent and is provided with a non-transparent reinforcement (16) in its rear end region.

10. Vehicle roof according to Claim 9, **characterized in that** the water channel (22, 122) reaches under the reinforcement (16).

11. Vehicle roof according to Claim 9 or 10, **characterized in that** the front closing element (12) is formed as a tilt-and-slide roof panel.

12. Vehicle roof according to one of the preceding claims, **characterized in that** the rear closing element (14) is provided with a non-transparent reinforcement (18) in its front end region.

13. Vehicle roof according to Claim 12, **characterized in that** the water channel (22, 122) reaches under the reinforcement (18) of the rear closing element (14), and the rear cheek (26, 126) of the water channel (22, 122) is drawn up as far as the underside of the rear closing element (14).

14. Vehicle roof according to Claim 13, **characterized in that** the rear cheek (26, 126) of the water channel (22, 122) is formed in such a way that it acts as a membrane and as a safeguard against objects or body parts being clamped in for the rear end region of the front closing element (12).

15. Vehicle roof according to one of the preceding claims, **characterized in that** the water channel (22) is provided with a flexible water-impermeable region (36) extending transversely with respect to the direction of travel, in order to permit the front water channel region (32) to be pivoted with respect to the rear water channel region (34).

## Revendications

1. Toit de véhicule comprenant un élément antérieur déplaçable de fermeture (12) assurant, sélectivement, l'occultation ou le dégagement au moins partiel d'une partie d'une ouverture (38) pratiquée dans le toit, et une gouttière (22, 122) disposée au-dessous de la région extrême postérieure (16) dudit élément antérieur de fermeture (12), afin de recueillir et d'évacuer de l'eau s'insinuant, **caractérisé par le fait que**, dans la partie restante de l'ouverture (38) du toit, un élément postérieur de fermeture (14), réalisé sous la forme d'un capot déployable ou d'un élément fixe transparent, est disposé derrière l'élément antérieur de fermeture (12), sachant que ledit élément antérieur de fermeture (12) peut coulisser au-dessous dudit élément postérieur de fermeture (14), le long d'une glissière de guidage (40) faisant corps avec le toit ; et sachant qu'un écran latéral respectif (70) disposé derrière la gouttière (22, 122) et au-dessous de l'élément postérieur de fermeture (14), dans les deux régions marginales latérales de ce dernier, est guidé dans ladite glissière de guidage (40) faisant corps avec le toit, et peut coulisser vers l'arrière conjointement à l'élément antérieur de fermeture (12), les écrans latéraux (70) étant réalisés sous la forme d'une protection empêchant le coincement d'objets et de parties corporelles.

2. Toit de véhicule, selon la revendication 1, **caractérisé par le fait que** la gouttière (22, 122) peut coulisser vers l'arrière conjointement à l'élément antérieur de fermeture (12), lors du dégagement de l'ouverture (38) du toit, et les écrans latéraux (70) sont reliés à ladite gouttière (22, 122).

3. Toit de véhicule, selon la revendication 2, **caractérisé par le fait que** les écrans latéraux (70) sont clipsés sur la gouttière (122).

4. Toit de véhicule, selon la revendication 2 ou 3, **caractérisé par le fait que** la gouttière (122) est guidée dans la direction longitudinale du toit, dans la glissière de guidage (40) faisant corps avec ledit toit.

5. Toit de véhicule, selon l'une des revendications précédentes, **caractérisé par le fait que** l'élément postérieur de fermeture (14) est respectivement muni dans ses deux régions marginales latérales, à sa face inférieure (146), d'un écran intérieur fixe (262) qui occupe une position interne vis-à-vis de l'écran latéral (70) considéré, dont il recouvre le bord supérieur respectif.

6. Toit de véhicule, selon la revendication 5, **caractérisé par le fait que** les écrans intérieurs (262) sont respectivement réalisés à double lèvre, le bord supérieur de l'écran latéral (70) considéré étant guidé entre les deux lèvres.

7. Toit de véhicule, selon l'une des revendications précédentes, **caractérisé par le fait qu'**un guide distinct, affecté aux écrans latéraux (70), décrit respectivement une trajectoire à courbure vers l'intérieur dans la région postérieure dudit toit de véhicule, et lesdits écrans latéraux (70) sont doués de souplesse élastique dans le sens de la hauteur, afin de suivre ladite trajectoire courbe.

8. Toit de véhicule, selon la revendication 7, **caractérisé par le fait que** les écrans latéraux (70) sont pourvus de régions (76) à épaisseur de paroi réduite, s'étendant dans le sens de la hauteur.

9. Toit de véhicule, selon l'une des revendications précédentes, **caractérisé par le fait que** l'élément antérieur de fermeture (12) est de réalisation transparente, et est doté d'un renfort opaque (16) dans sa région extrême postérieure.

10. Toit de véhicule, selon la revendication 9, **caractérisé par le fait que** la gouttière (22, 122) emprisonne le renfort (16) par-dessous.

11. Toit de véhicule, selon la revendication 9 ou 10, **caractérisé par le fait que** l'élément antérieur de fermeture (12) est réalisé sous la forme d'un capot de toit relevable coulissant.

12. Toit de véhicule, selon l'une des revendications précédentes, **caractérisé par le fait que** l'élément postérieur de fermeture (14) est muni d'un renfort opaque (18) dans sa région extrême antérieure.

13. Toit de véhicule, selon la revendication 12, **caractérisé par le fait que** la gouttière (22, 122) emprisonne par-dessous le renfort (18) de l'élément postérieur de fermeture (14), et la joue postérieure (26, 126) de ladite gouttière (22, 122) est rehaussée jusqu'à la face inférieure dudit élément postérieur de retenue (14).

14. Toit de véhicule, selon la revendication 13, **caractérisé par le fait que** la joue postérieure (26, 126) de la gouttière (22, 122) est réalisée de telle sorte qu'elle remplisse la fonction d'un écran et d'une protection destinés à la région extrême postérieure de l'élément antérieur de fermeture (12), et prévenant le coincement d'objets ou de parties corporelles.

15. Toit de véhicule, selon l'une des revendications précédentes, **caractérisé par le fait que** la gouttière (22) est pourvue d'une région (36) imperméable, flexible et s'étendant transversalement par rapport à la direction du déplacement, afin de permettre un pivotement de la région antérieure (32) de la gouttière vis-à-vis de la région postérieure (34) de ladite gouttière.
